# EUROPÄISCHE PATENTSCHRIFT

(11) **EP 3 158 344 B1**
(45) Veröffentlichungstag und Bekanntmachung des Hinweises auf die Patenterteilung: **18.08.2021**
(21) Anmeldenummer: 15730747.1
(22) Anmeldetag: 17.06.2015
(51) Int. Cl.: G01P 15/04, G01P 15/08, B61F 9/00, B61L 15/00, B61L 23/00

(54) **VERFAHREN UND VORRICHTUNG ZUR ENTGLEISUNGSERKENNUNG**
DERAILING RECOGNITION METHOD AND DEVICE
PROCÉDÉ ET DISPOSITIF DE RECONNAISSANCE D'UN DÉRAILLEMENT

(30) Priorität: 20.06.2014 DE 102014108685
(43) Veröffentlichungstag der Anmeldung: 26.04.2017
(73) Patentinhaber: KNORR-BREMSE Systeme für Schienenfahrzeuge GmbH, 80809 München (DE)
(72) Erfinder: ETZBACH, Andrea, 80807 München (DE)
(86) Internationale Anmeldenummer: PCT/EP2015/063503
(87) Internationale Veröffentlichungsnummer: WO 2015/193333

(56) Entgegenhaltungen:
- EP-A1- 1 213 202
- EP-A1- 2 374 686
- DE-C1- 19 953 677
- DE-T2- 69 828 316
- None

## Beschreibung

Die vorliegende Erfindung betrifft ein Verfahren zur Erkennung einer Entgleisung wenigstens eines Radsatzes eines Schienenfahrzeugs, bei dem während einer Fahrt insbesondere kontinuierlich ein die Beschleunigung des Radsatzes in einer Richtung repräsentierendes Beschleunigungssignal gemessen wird.

Ohne technische Hilfsmittel kann eine Entgleisung eines Radsatzes oder eines Drehgestells eines Schienenfahrzeugs vom Zugführer, insbesondere bei langen Zügen, oft nicht erkannt werden. Der entgleiste Radsatz bleibt dann unbemerkt und wird mitgeschleift, und der entgleiste Wagen läuft Gefahr, mit einem Tunnel, einer Brücke oder einem entgegenkommenden Zug zu kollidieren. Um diese Gefahr gering zu halten, muss eine Entgleisung möglichst frühzeitig erkannt werden, so dass von dem Zugführer oder der Bremssteuerung des Schienenfahrzeugs entsprechende Gegenmaßnahmen wie beispielsweise eine Notbremsung eingeleitet werden können.

Da ein entgleister Radsatz durch die Entgleisung hervorgerufenen Beschleunigungen unterworfen ist, ist es bekannt, die Beschleunigung des Radsatzes, vorzugsweise die Vertikalbeschleunigung, direkt am Rad mittels eines Beschleunigungssensors zu überwachen. Insbesondere rollt bzw. springt ein entgleister Radsatz über den Oberbau der befahrenen Fahrspur, wodurch starke Stöße und dadurch hohe Beschleunigungen in den Radsatz eingeprägt werden. Das von dem Beschleunigungssensor ausgegebene Beschleunigungssignal kann dann von einer Auswerteeinrichtung ausgewertet werden, um den Zustand des Radsatzes, entgleist oder nicht entgleist, zu bestimmen. Grundsätzlich kann auch die Beschleunigung des Drehgestells überwacht werden, welches jedoch gedämpft ist.

Beispielsweise ist es aus dem Dokument DE 199 53 677 C1 bekannt, das Signal des Beschleunigungssensors zweifach zu integrieren und mit einem oberen und einem unteren Grenzwert zu vergleichen, wobei bei Unterschreiten bzw. Überschreiten des jeweiligen Grenzwerts auf eine Entgleisung erkannt wird. Nachteilig hieran ist jedoch, dass eine Entgleisungsdetektion nur zum eigentlichen Entgleisungszeitpunkt möglich ist, jedoch nicht mehr danach. Ferner ist es bekannt, das Beschleunigungssignal auf eine Korrelation mit einer Schwellenfachfrequenz hin zu prüfen. Dies setzt jedoch das Vorhandensein von Schwellen im Gleisoberbau voraus, wobei noch hinzukommt, dass die Schwellen hierbei gleichmäßige Abstände aufweisen müssen und die Geschwindigkeit des Schienenfahrzeugs innerhalb eines bestimmten Bereichs liegen muss. Darüber hinaus sind auch mechanische Entgleisungssysteme bekannt, die bei Güterwagen bei einem starken Stoß eine Hauptluftleitung einer Bremseinrichtung entlüften, oder induktive Systeme, die den Abstand zwischen dem Drehgestell und der Schiene messen. Zu beiden genannten Systemen ist bekannt, dass sie zu Fehlauslösungen neigen.

Die EP 2 374 686 A1 offenbart ein Verfahren und eine Vorrichtung zur Entgleisungserkennung, bei denen während einer Fahrt eines Schienenfahrzeugs mittels Winkelgeschwindigkeitssensoren Nickgeschwindigkeiten und Rollgeschwindigkeiten eines Fahrgestells erfasst und mit Schwellenwerten verglichen werden.

Die EP 1 213 202 A1 beschreibt ein Verfahren zur Abbildung des Geleisezustands und/oder des Betriebsverhaltens von Schienenfahrzeugen. Die DE 698 28 316 T2 beschreibt ein Verfahren und eine Vorrichtung zum Feststellen des Entgleisens von Eisenbahnwagen.

Der Erfindung liegt die Aufgabe zugrunde, ein Verfahren der eingangs genannten Art anzugeben, das ermöglicht, einen entgleisten Zustand sicher zu erkennen und einen nicht-entgleisten Zustand trotz Stöße durch Gleisunebenheiten, Schienenstöße, Weichenübergänge, Flachstellen an den Rädern und dergleichen sicher von einem entgleisten Zustand zu unterscheiden.

Diese Aufgabe wird durch ein Verfahren mit den Merkmalen des Anspruchs 1 gelöst und insbesondere dadurch, dass zu einer Menge von innerhalb eines vorgegebenen Zeitfensters liegenden Werten des zeitlichen Verlaufs des Beschleunigungssignals des Radsatzes das p-Quantil bestimmt wird, wobei p einem vorgegebenen Wert größer 0 und kleiner 1 entspricht, und das p-Quantil mit einem vorgegebenen Schwellwert verglichen und das Kriterium geprüft wird, ob das p-Quantil den vorgegebenen Schwellwert über- oder unterschreitet.

Durch das erfindungsgemäße Verfahren können andere Ereignisse mit hohen Beschleunigungen, wie z.B. Überfahren von Schienenstößen, Weichen und Flachstellen am Rad, gut von Entgleisungen unterschieden werden. Die gute Unterscheidbarkeit liegt an der Verwendung des Quantils, das mit einem vorgegebenen Schwellwert verglichen wird, wodurch Ausreißer in dem Beschleunigungssignal, die durch die genannten Schienenstöße, Weichen und Flachstellen am Rad hervorgerufenen werden, nicht oder nur gering gewichtet werden. Fehlalarme können hierdurch nahezu vollständig ausgeschlossen werden, während Entgleisungen mit sehr hoher Wahrscheinlichkeit erkannt werden können. Das vergleichsweise einfache Verfahren erlaubt es, eine Entgleisung auch noch nach dem eigentlichen Entgleisungsvorgang zu erkennen. Das erfindungsgemäße Verfahren ist unabhängig vom Gleisoberbau der befahrenen Fahrspur und sowohl bei niedrigen als auch bei sehr hohen Zuggeschwindigkeiten zuverlässig einsetzbar.

Bevorzugt wird das erfindungsgemäße Verfahren bei allen Radsätzen des Schienenfahrzeugs durchgeführt. Insbesondere kann das erfindungsgemäße Verfahren für beide Räder eines jeweiligen Radsatzes durchgeführt werden.

Die Beschleunigung des Radsatzes wird in vertikaler Richtung, in Fahrtrichtung oder in Querrichtung zu einer Fahrtrichtung des Schienenfahrzeugs gemessen, oder in einer Richtung, die sich durch beliebige Überlagerung von wenigstens zwei dieser Richtungen zusammensetzt. Eine Messung der Beschleunigung in vertikaler Richtung ist bevorzugt, da die Vertikalbeschleunigungen bei einer Entgleisung besonders ausgeprägt sind. Die Beschleunigung kann an einem Rad des Radsatzes oder an dem zugehörigen Drehgestell gemessen werden.

Die Zuverlässigkeit des erfindungsgemäßen Verfahrens ist am höchsten, wenn in dem zeitlichen Verlauf des Beschleunigungssignals auftretende lokale Extremwerte bestimmt werden und das p-Quantil zu der Menge der innerhalb des vorgegebenen Zeitfensters liegenden lokalen Extremwerte bestimmt wird. Bei der Menge von innerhalb des vorgegebenen Zeitfensters liegenden Werten handelt es sich dann um eine Menge von lokalen Extremwerten. Grundsätzlich kann das p-Quantil aber auch auf allen innerhalb des vorgegebenen Zeitfensters liegenden Werten des zeitlichen Verlaufs des Beschleunigungssignals oder einer Teilmenge hiervon basieren.

Bei Stößen aufgrund schlechter Schiene oder einer Entgleisung treten in dem gemessenen Beschleunigungssignal Auslenkungen auf. Die in dem vorgegebenen Zeitfenster liegenden Werte der vorgenannten Menge bilden dabei eine Verteilung. Das p-Quantil entspricht dem Wert, bei dem p % aller Werte der Menge, beispielsweise aller lokalen Extremwerte, kleiner sind als dieser Wert, und (1-p) % größer als dieser Wert. Das Zeitfenster sollte dabei so groß gewählt werden, dass eine ausreichend hohe Anzahl an Auslenkungen darin liegt. p sollte groß genug gewählt werden, dass auch kleine Auslenkungen, die durch eine Entgleisung entstehen, innerhalb des Quantils liegen, und klein genug, dass einzelne Auslenkungen, die durch Störungen entstehen, die bei Normalfahrt auftreten, außerhalb des Quantils liegen.

Bei den lokalen Extremwerten kann es sich um lokale Minimalwerte oder lokale Maximalwerte des zeitlichen Verlaufs des Beschleunigungssignals oder um die Absolutbeträge oder negierten Absolutbeträge der lokalen Minimal- und Maximalwerte handeln. Wird beispielsweise das p-Quantil zu der Menge der innerhalb des vorgegebenen Zeitfensters liegenden insbesondere positiven lokalen Maximalwerte bestimmt, kann das Kriterium geprüft werden, ob das p-Quantil den vorgegebenen Schwellwert überschreitet. Wird das p-Quantil hingegen zu der Menge der innerhalb des vorgegebenen Zeitfensters liegenden insbesondere negativen lokalen Minimalwerte bestimmt, kann das Kriterium geprüft werden, ob das p-Quantil den vorgegebenen Schwellwert unterschreitet.

Auf eine Entgleisung kann erkannt werden, wenn das Kriterium, insbesondere über einen vorgegebenen Zeitraum hinweg, erfüllt ist. Grundsätzlich kann eine Entgleisung also bereits dann erkannt werden, wenn nur ein Beschleunigungssignal in einer Richtung gemessen wird und die zugehörige Prüfung ergibt, dass das zugehörige Kriterium erfüllt ist. Die Erfüllung des Kriteriums über einen vorgegebenen Zeitraum hinweg erhöht die Zuverlässigkeit der Prüfung.

Die Prüfung des Kriteriums, ob das p-Quantil den vorgegebenen Schwellwert überschreitet, wobei bei Erfüllung des Kriteriums auf eine Entgleisung erkannt wird, umfasst im Sinne der vorliegenden Anmeldung insbesondere auch, dass das Kriterium geprüft wird, ob das p-Quantil den vorgegebenen Schwellwert unterschreitet, wobei bei Erfüllung des Kriteriums auf keine Entgleisung erkannt wird. Ebenso umfasst die Prüfung, ob das p-Quantil den vorgegebenen Schwellwert unterschreitet, wobei bei Erfüllung des Kriteriums auf eine Entgleisung erkannt wird, im Sinne der vorliegenden Anmeldung insbesondere auch, dass das Kriterium geprüft wird, ob das p-Quantil den vorgegebenen Schwellwert überschreitet, wobei bei Erfüllung des Kriteriums auf keine Entgleisung erkannt wird.

Es ist jedoch auch möglich, dass eine Entgleisung erst dann erkannt wird, wenn mehrere Kriterien erfüllt sind, die geprüft werden und jeweils auf das Vorliegen einer Entgleisung schließen lassen. Hierdurch kann eine Plausibilitätsprüfung durchgeführt werden, bei der die Ergebnisse verschiedener Prüfungen miteinander verglichen werden, um mögliche Fehler bei einer der Prüfungen zu identifizieren. Trifft das p-Quantil exakt den vorgegebenen Schwellwert, kann entweder auf eine Entgleisung erkannt werden oder eine Entgleisung noch nicht angenommen werden.

Vor Bestimmung des p-Quantils kann ein Tiefpassfilter auf das Beschleunigungssignal angewandt werden, d.h. es kann eine Vorfilterung des Beschleunigungssignals stattfinden, um Aliasing-Effekte in dem Beschleunigungssignal zu vermeiden und/oder einen eventuellen Offset des Beschleunigungssignals zu bereinigen.

Bei dem vorgegebenen Zeitfenster kann es sich um ein Zeitfenster mit einer Dauer von zwischen 1 ms und 60 s, insbesondere zwischen 100 ms und 10 s, handeln. Die Dauer des Zeitfensters wird erfindungsgemäß in Abhängigkeit von der Geschwindigkeit des Schienenfahrzeugs gewählt. Bevorzugt ist der Wert von p nicht größer als 0,9, insbesondere nicht größer als 0,7, und liegt insbesondere zwischen 0,1 und 0,5. In diesen Bereichen können Entgleisungen besonders zuverlässig erkannt werden. Erfindungsgemäß ist die Dauer des vorgegebenen Zeitfensters von der Schienenfahrzeuggeschwindigkeit abhängig. Beispielsweise kann das Zeitfenster bei geringeren Geschwindigkeiten länger gewählt werden, um die Bestimmung des p-Quantils mit einer statistisch ausreichend hohen Anzahl an Auslenkungen vornehmen zu können. Der Schwellwert kann konstant oder von wenigstens einem Parameter, beispielsweise der Schienenfahrzeuggeschwindigkeit oder einer Beladung oder dem Gleisoberbau, abhängig sein. Hierdurch kann das erfindungsgemäße Verfahren optimal an die jeweiligen Randbedingungen angepasst werden.

Gemäß einer Ausführungsform kann vorgesehen sein, dass mehrere derartige Beschleunigungssignale für verschiedene Richtungen gemessen und ein jeweiliges p-Quantil bestimmt und mit einem jeweiligen vorgegebenen Schwellwert verglichen und das jeweilige Kriterium geprüft wird, ob das jeweilige p-Quantil den jeweiligen vorgegebenen Schwellwert über- oder unterschreitet. Mit einer derartigen Vorgehensweise kann eine Plausibilitätsprüfung, wie sie vorstehend bereits erwähnt ist, durchgeführt werden.

Darüber hinaus kann zusätzlich ein die Radgeschwindigkeit charakterisierender Parameter, beispielsweise die Radgeschwindigkeit selbst oder eine Polradfrequenz, bestimmt und mit einem vorgegebenen Referenzverlauf verglichen und das Kriterium geprüft werden, ob der Parameter ein vorgegebenes Maß an Abweichung von dem vorgegebenen Referenzverlauf überschreitet. Beispielsweise kann die Ableitung des Radgeschwindigkeitssignals nach der Zeit mit einem vorgegebenen Schwellwert verglichen werden, um Sprünge in der Ableitung, wie sie bei einer Entgleisung auftreten, zu identifizieren.

Alternativ oder zusätzlich kann eine Schwellenfachfrequenz, die sich aus der Schienenfahrzeuggeschwindigkeit und dem gegenseitigen Abstand der Schwellen des Gleisoberbaus ergibt, bestimmt und der zeitliche Abstand von in dem zeitlichen Verlauf des Beschleunigungssignals auftretenden lokalen Extremwerten mit der Schwellenfachfrequenz verglichen und das Kriterium geprüft werden, ob das Beschleunigungssignal ein vorgegebenes Maß an Korrelation mit der Schwellenfachfrequenz überschreitet. Dies ist insbesondere dann der Fall, wenn der Radsatz über die Schwellen des Gleisoberbaus rollt und sich nicht mehr auf dem Gleis befindet.

Alternativ oder zusätzlich kann das Beschleunigungssignal auf das Kriterium des Vorliegens eines Amplitudensprungs zumindest auf eine vorgegebene Höhe und über eine vorgegebene Dauer hin überwacht werden. Es muss dann der Sprung, d.h. eine länger andauernde Erhöhung der Amplituden der vorgenannten Auslenkungen, von einem Puls, d.h. einer kurzzeitigen Erhöhung, wie sie bei einer Weichenüberfahrt oder dergleichen vorkommen kann, unterschieden werden.

Insbesondere kann auch auf eine Entgleisung erkannt werden, wenn das oder zumindest eines der weiteren Kriterien, insbesondere über einen vorgegebenen Zeitraum hinweg, erfüllt ist. Es kann also vorgesehen sein, dass bei mehreren Prüfungen auch dann auf eine Entgleisung erkannt wird, wenn nur bei einer der Prüfungen das entsprechende Entgleisungskriterium erfüllt ist. Es kann vorgesehen sein, dass erst dann auf eine Entgleisung erkannt wird, wenn wenigstens zwei Kriterien, insbesondere über einen vorgegebenen Zeitraum hinweg, erfüllt sind. Die Dauer des vorgegebenen Zeitraums kann für verschiedene Kriterien unterschiedlich sein. Es kann auch vorgesehen sein, dass auf eine Entgleisung erkannt wird, sobald wenigstens eine vorgegebene Mindestanzahl an Kriterien, insbesondere sämtliche Kriterien, gleichzeitig erfüllt sind.

Grundsätzlich können die Ergebnisse der mehreren Prüfungen gemeinsam bewertet werden und in Abhängigkeit von der gemeinsamen Bewertung kann wahlweise auf eine Entgleisung erkannt werden. Insbesondere kann auf eine Entgleisung erkannt werden, wenn die Ergebnisse der mehreren Prüfungen einer vorgegebenen Konstellation, insbesondere aus einer Gruppe von vorgegebenen Konstellationen, entsprechen. Insbesondere können also mehrere Auswerteinstanzen vorgesehen sein, die jeweils eine Prüfung durchführen.

Die Erfindung betrifft ferner eine Vorrichtung zur Erkennung einer Entgleisung wenigstens eines Radsatzes eines Schienenfahrzeugs, mit einem Beschleunigungssensor, der dazu ausgebildet ist, während einer Fahrt ein die Beschleunigung des Radsatzes in vertikaler Richtung, in Fahrtrichtung, in Querrichtung zu einer Fahrtrichtung des Schienenfahrzeugs und/oder in einer Richtung, die sich durch beliebige Überlagerung von wenigstens zwei dieser Richtungen zusammensetzt, repräsentierendes Beschleunigungssignal zu messen, und einer Auswerteeinrichtung, die dazu ausgebildet ist, zu einer Menge von innerhalb eines jeweiligen vorgegebenen Zeitfensters liegenden Werten des zeitlichen Verlaufs des Beschleunigungssignals das p-Quantil zu bestimmen, wobei p einem vorgegebenen Wert größer 0 und kleiner 1 entspricht und wobei die Dauer des vorgegebenen Zeitfensters von der Schienenfahrzeuggeschwindigkeit abhängig ist, das p-Quantil mit einem vorgegebenen Schwellwert zu vergleichen, und das Kriterium zu prüfen, ob das p-Quantil den vorgegebenen Schwellwert über- oder unterschreitet.

Weiterbildungen der erfindungsgemäßen Vorrichtung ergeben sich in analoger Weise aus den Weiterbildungen des erfindungsgemäßen Verfahrens.

Weitere vorteilhafte Ausgestaltungen der Erfindung sind in den abhängigen Ansprüchen, der Figurenbeschreibung und in der Zeichnung beschrieben.

Die Erfindung wird im Folgenden beispielhaft unter Bezugnahme auf die Zeichnung beschrieben. Es zeigen,
- Fig. 1: eine Abbildung zu einer Messung einer auf ein Rad eines Schienenfahrzeugs einwirkenden Vertikalbeschleunigung während einer Fahrt auf schlechtem Gleis,
- Fig. 2: eine Abbildung zu einer Messung einer auf ein Rad eines Schienenfahrzeugs einwirkenden Vertikalbeschleunigung vor, während und nach dem Moment einer Entgleisung,
- Fig. 3: eine Abbildung zu einer Messung einer auf ein bereits entgleistes Rad eines Schienenfahrzeugs einwirkenden Vertikalbeschleunigung, und
- Fig. 4: eine Zustandsmaschine zur Beschreibung eines zur Plausibilisierung der Erkennung einer Entgleisung verwendeten Algorithmus.

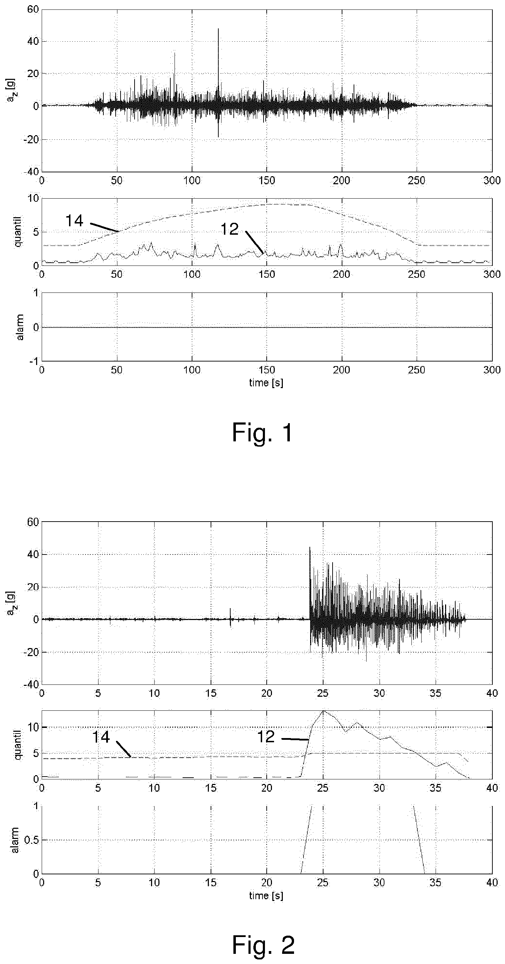

Fig. 1 zeigt in dem oberen Diagramm eine Aufnahme einer Vertikalbeschleunigung, die auf ein Rad eines nicht-entgleisten Radsatzes eines Schienenfahrzeugs einwirkt, wenn das Schienenfahrzeug auf schlechtem Gleis fährt. In dem oberen Diagramm in Fig. 2 hingegen ist eine Aufnahme einer Vertikalbeschleunigung gezeigt, die auf ein Rad eines Radsatzes eines Schienenfahrzeugs unmittelbar vor und unmittelbar nach einem Entgleisungsvorgang des Radsatzes einwirkt. Die Vertikalbeschleunigungssignale wurden jeweils mit einem entsprechenden Beschleunigungssensor aufgenommen. Wie aus den beiden Diagrammen ersichtlich ist, treten in den beiden Signalverläufen mit einem Rauschen vergleichbare positive und negative lokale Extremwerte auf, die sich im Wesentlichen innerhalb eines Bereichs von ± 40 g bewegen. In Fig. 1 sind diese lokalen Extremwerte auf Unebenheiten und sonstige Störungen im Gleis zurückzuführen, in Fig. 2 auf den Entgleisungszustand.

Um den entgleisten Zustand in Fig. 2 von dem nicht-entgleisten Zustand in Fig. 1 mittels einer Auswerteeinrichtung des Schienenfahrzeugs unterscheiden zu können, werden die Absolutwerte der positiven und negativen lokalen Extremwerte gemeinsam betrachtet, und es wird zu der Menge der innerhalb eines vorgegebenen Zeitfensters liegenden Absolutwerte der lokalen Extremwerte, welche eine Verteilung bilden, ein p-Quantil bestimmt, beispielsweise das 0,3-Quantil, d.h. es wird der Wert bestimmt, bei dem 30% aller Absolutwerte der lokalen Extremwerte kleiner sind als dieser Wert, und 70% größer als dieser Wert. Das 0,3-Quantil wird dann mit einem vorgegebenen Schwellwert verglichen, und es wird das Kriterium geprüft, ob das p-Quantil den vorgegebenen Schwellwert überschreitet. Bei diesem Verfahren werden Beschleunigungs-Extremwerte, die durch Schienenstöße, Weichen und Flachstellen am Rad hervorgerufenen werden, nicht oder nur gering gewichtet. Daher kann davon ausgegangen werden, dass eine Entgleisung vorliegt, wenn das Kriterium erfüllt ist, und dass keine Entgleisung vorliegt, wenn das Kriterium nicht erfüllt ist.

In den mittleren Abbildungen der beiden Fig. 1 und 2 sind die zeitlichen Verläufe 12 der beiden 0,3-Quantile für die beiden Beschleunigungsverläufe dargestellt. Der Verlauf des 0,3-Quantils in Fig. 1 (schlechte Schiene) liegt immer unter 5 g, wohingegen im Verlauf des 0,3-Quantils in Fig. 2 (Entgleisungsvorgang) auch Werte von bis zu größer 10 g auftreten. Das der Bestimmung eines jeweiligen Quantils zugrunde liegende vorgegebene Zeitfenster besitzt eine Dauer von 1s. Die Zeitfenster, zu denen jeweils ein Quantil, d.h. ein Wert des Verlaufs, bestimmt wird, schließen zeitlich unmittelbar aneinander an. Grundsätzlich können die Zeitfenster aber auch überlappen oder es kann ein zeitlich wanderndes Zeitfenster verwendet werden. Ebenfalls zu sehen ist ein geschwindigkeitsabhängiger Schwellwert 14, gegen den das Quantil vergleichen wird.

In den unteren Abbildungen der beiden Fig. 1 und 2 sind die zeitlichen Verläufe der Zustandssignale dargestellt, die anzeigen, ob eine Entgleisung vorliegt oder nicht. Bei der vorliegenden Ausführungsform wird beispielsweise bei einem Schwellwert, der sich abhängig von der Schienenfahrzeuggeschwindigkeitsabhängig im Bereich von ca. 3,5 g bis ca. 9 g bzw. ca. 4 g bis ca. 5 g bewegt, auf eine Entgleisung erkannt. Entsprechend ist das Zustandssignal in Fig. 1 (schlechte Schiene) immer auf null (keine Entgleisung), wohingegen das Signal in Fig. 2 (Entgleisungsvorgang) mit dem Auftreten der Entgleisung seinen Zustand von null auf eins (Entgleisung) ändert. Mit dem vorliegenden Verfahren kann eine Entgleisung daher zuverlässig detektiert werden bzw. ein entgleister Zustand kann zuverlässig von einem nicht-entgleisten Zustand unterschieden werden.

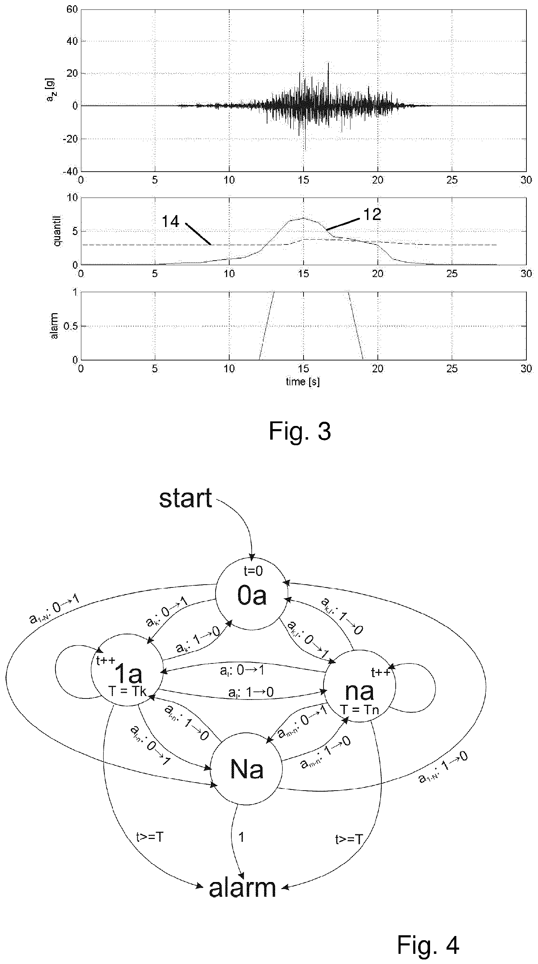

Fig. 3 zeigt eine zu Fig. 2 analoge Darstellung, wobei der betroffene Radsatz des Schienenfahrzeugs jedoch bereits ursprünglich, d.h. von Anfang an, neben das Gleis gesetzt wurde. Auch in diesem Fall kann die andauernde Entgleisung zuverlässig detektiert werden.

Alternativ können neben der vorgenannten Vertikalbeschleunigung auch Beschleunigungen in anderen Richtungen auf die vorstehend erläuterte Weise geprüft bzw. überwacht werden, um eine Entgleisung zu erkennen, oder es können Radgeschwindigkeiten oder Korrelationen von Beschleunigungen mit einer Schwellenfachfrequenz geprüft bzw. überwacht werden, wie es weiter oben erläutert ist. Dann können einzelne Entgleisungsbewertungen von unterschiedlichen Auswerteinstanzen gegeneinander plausibilisiert werden.

In Fig. 4 ist eine Zustandsmaschine für eine derartige Plausibilisierung gezeigt. Es wird dabei angenommen, dass mehrere Auswerteinstanzen vorhanden sind, die jeweils einen Entgleisungsalarm an erzeugen können, wobei der Wert 0 keinem Alarm und der Wert 1 einem Alarm entspricht. N ist die Anzahl aller oder zumindest einer Mehrheit der Auswerteinstanzen. Die möglichen Zustände sind: Zustand 0a, keine Auswerteinstanz liefert einen Alarm, ein Timer t wird auf 0 gesetzt; Zustand 1a, genau eine Auswerteinstanz liefert einen Alarm, der Timer t läuft bis ein Time-Out T erreicht ist, dann wird ein Gesamtalarm gesetzt, was dem Erkennen einer Entgleisung entspricht; Zustand na, genau n Auswerteinstanzen liefern jeweils einen Alarm, der Timer t läuft bis der Time-Out T erreicht ist, dann wird der Gesamtalarm gesetzt; Na, N Auswerteinstanzen liefern jeweils einen Alarm, der Gesamtalarm wird sofort gesetzt, d.h. der Time-Out wird nach T=0 erreicht.

Übergänge zwischen den Zuständen treten dann auf, wenn sich eine oder mehrere Alarmmeldungen ändern, entweder von kein Alarm nach Alarm oder von Alarm nach kein Alarm. Der Time-Out T kann je nach Zustand unterschiedlich sein und davon abhängen, welche Auswerteinstanz bzw. welche Auswerteinstanzen einen Alarm ausgeben. Dieser Wert sollte abhängig von dem Vertrauen in die Entgleisungserkennung der einzelnen Auswerteinstanzen gewählt werden.

## Patentansprüche

1. Verfahren zur Erkennung einer Entgleisung wenigstens eines Radsatzes eines Schienenfahrzeugs, bei dem während einer Fahrt ein Beschleunigungssignal gemessen wird, wobei das Beschleunigungssignal die Beschleunigung des Radsatzes in vertikaler Richtung, in Fahrtrichtung, in Querrichtung zu einer Fahrtrichtung des Schienenfahrzeugs oder in einer Richtung, die sich durch beliebige Überlagerung von wenigstens zwei dieser Richtungen zusammensetzt, repräsentiert,
**dadurch gekennzeichnet, dass**
zu einer Menge von innerhalb eines vorgegebenen Zeitfensters liegenden Werten des zeitlichen Verlaufs des Beschleunigungssignals das p-Quantil bestimmt wird, wobei p einem vorgegebenen Wert größer 0 und kleiner 1 entspricht und wobei die Dauer des vorgegebenen Zeitfensters von der Schienenfahrzeuggeschwindigkeit abhängig ist, und das p-Quantil mit einem vorgegebenen Schwellwert verglichen und das Kriterium geprüft wird, ob das p-Quantil den vorgegebenen Schwellwert über- oder unterschreitet.

2. Verfahren nach Anspruch 1,
**dadurch gekennzeichnet,**
**dass** vor Bestimmung des p-Quantils ein Tiefpassfilter auf das Beschleunigungssignal angewandt wird.

3. Verfahren nach zumindest einem der vorstehenden Ansprüche,
**dadurch gekennzeichnet,**
**dass** in dem zeitlichen Verlauf des Beschleunigungssignals auftretende lokale Extremwerte bestimmt werden und das p-Quantil zu der Menge der innerhalb des vorgegebenen Zeitfensters liegenden lokalen Extremwerte bestimmt wird.

4. Verfahren nach Anspruch 3,
**dadurch gekennzeichnet,**
**dass** es sich bei den lokalen Extremwerten um lokale Minimalwerte oder lokale Maximalwerte des zeitlichen Verlaufs des Beschleunigungssignals oder um die Absolutbeträge oder negierten Absolutbeträge der lokalen Minimal- und Maximalwerte handelt.

5. Verfahren nach zumindest einem der vorstehenden Ansprüche,
**dadurch gekennzeichnet,**
**dass** es sich bei dem vorgegebenen Zeitfenster um ein Zeitfenster mit einer Dauer von zwischen 1 ms und 60 s, insbesondere zwischen 100 ms und 10 s, handelt.

6. Verfahren nach zumindest einem der vorstehenden Ansprüche,
**dadurch gekennzeichnet,**
**dass** der Wert von p nicht größer als 0,9 ist, insbesondere nicht größer als 0,7 ist, insbesondere zwischen 0,1 und 0,5 liegt.

7. Verfahren nach zumindest einem der vorstehenden Ansprüche,
**dadurch gekennzeichnet,**
**dass** der Schwellwert konstant oder von wenigstens einem Parameter, beispielsweise der Schienenfahrzeuggeschwindigkeit oder einer Beladung, abhängig ist.

8. Verfahren nach zumindest einem der vorstehenden Ansprüche,
**dadurch gekennzeichnet,**
**dass** mehrere derartige Beschleunigungssignale für verschiedene Richtungen gemessen und ein jeweiliges p-Quantil bestimmt und mit einem jeweiligen vorgegebenen Schwellwert verglichen und das jeweilige Kriterium geprüft wird, ob das jeweilige p-Quantil den jeweiligen vorgegebenen Schwellwert über- oder unterschreitet.

9. Verfahren nach zumindest einem der vorstehenden Ansprüche,
**dadurch gekennzeichnet,**
**dass** zusätzlich ein die Radgeschwindigkeit charakterisierender Parameter bestimmt und mit einem vorgegebenen Referenzverlauf verglichen und das Kriterium geprüft wird, ob der Parameter ein vorgegebenes Maß an Abweichung von dem vorgegebenen Referenzverlauf überschreitet.

10. Verfahren nach zumindest einem der vorstehenden Ansprüche,
**dadurch gekennzeichnet,**
**dass** zusätzlich eine Schwellenfachfrequenz bestimmt und der zeitliche Abstand von in dem zeitlichen Verlauf des Beschleunigungssignals auftretenden lokalen Extremwerten mit der Schwellenfachfrequenz verglichen und das Kriterium geprüft wird, ob das Beschleunigungssignal ein vorgegebenes Maß an Korrelation mit der Schwellenfachfrequenz überschreitet.

11. Verfahren nach zumindest einem der vorstehenden Ansprüche,
**dadurch gekennzeichnet,**
**dass** zusätzlich das Beschleunigungssignal auf das Kriterium des Vorliegens eines Amplitudensprungs zumindest auf eine vorgegebene Höhe und über eine vorgegebene Dauer hin überwacht wird.

12. Verfahren nach zumindest einem der Ansprüche 8 bis 11,
**dadurch gekennzeichnet,**
**dass** auch auf eine Entgleisung erkannt wird, wenn das oder zumindest eines der weiteren Kriterien, insbesondere über einen vorgegebenen Zeitraum hinweg, erfüllt ist.

13. Verfahren nach zumindest einem der Ansprüche 8 bis 12,
**dadurch gekennzeichnet,**
**dass** erst dann auf eine Entgleisung erkannt wird, wenn wenigstens zwei Kriterien, insbesondere über einen vorgegebenen Zeitraum hinweg, erfüllt sind.

14. Verfahren nach zumindest Anspruch 12 oder 13,
**dadurch gekennzeichnet,**
**dass** die Dauer des vorgegebenen Zeitraums für verschiedene Kriterien unterschiedlich ist.

15. Verfahren nach zumindest einem der Ansprüche 8 bis 14,
**dadurch gekennzeichnet,**
**dass** auf eine Entgleisung erkannt wird, sobald wenigstens eine vorgegebene Mindestanzahl an Kriterien, insbesondere sämtliche Kriterien, gleichzeitig erfüllt sind.

16. Verfahren nach zumindest einem der Ansprüche 8 bis 15,
**dadurch gekennzeichnet,**
**dass** die Ergebnisse der mehreren Prüfungen gemeinsam bewertet werden und in Abhängigkeit von der gemeinsamen Bewertung wahlweise auf eine Entgleisung erkannt wird.

17. Verfahren nach zumindest einem der Ansprüche 8 bis 16,
**dadurch gekennzeichnet,**
**dass** auf eine Entgleisung erkannt wird, wenn die Ergebnisse der mehreren Prüfungen einer vorgegebenen Konstellation entsprechen.

18. Vorrichtung zur Erkennung einer Entgleisung wenigstens eines Radsatzes eines Schienenfahrzeugs, mit einem Beschleunigungssensor, der dazu ausgebildet ist, während einer Fahrt ein die Beschleunigung des Radsatzes in vertikaler Richtung, in Fahrtrichtung, in Querrichtung zu einer Fahrtrichtung des Schienenfahrzeugs oder in einer Richtung, die sich durch beliebige Überlagerung von wenigstens zwei dieser Richtungen zusammensetzt, repräsentierendes Beschleunigungssignal zu messen,
**gekennzeichnet durch**
eine Auswerteeinrichtung, die dazu ausgebildet ist, zu einer Menge von innerhalb eines vorgegebenen Zeitfensters liegenden Werten des zeitlichen Verlaufs des Beschleunigungssignals das p-Quantil zu bestimmen, wobei p einem vorgegebenen Wert größer 0 und kleiner 1 entspricht und wobei die Dauer des vorgegebenen Zeitfensters von der Schienenfahrzeuggeschwindigkeit abhängig ist, das p-Quantil mit einem vorgegebenen Schwellwert zu vergleichen, und das Kriterium zu prüfen, ob das p-Quantil den vorgegebenen Schwellwert über- oder unterschreitet.

## Claims

1. Method for detecting a derailment of at least one wheelset of a rail vehicle, in which an acceleration signal is measured during a journey, the acceleration signal representing the acceleration of the wheelset in vertical direction, in the direction of travel, in the transverse direction relative to the direction of travel of the rail vehicle, or in a direction made up of any combination of at least two of these directions,
**characterised in that**
the p-quantile is determined for a set of values, lying within a preset time window, of the course of the acceleration signal over time, p corresponding to a preset value greater than 0 and less than 1, and the duration of the preset time window being dependent on the rail vehicle speed, and
the p-quantile is compared with a preset threshold value and the criterion is checked whether the p-quantile is above or below the preset threshold value.

2. Method according to claim 1,
**characterised in that**
a low-pass filter is applied to the acceleration signal before the p-quantile is determined.

3. Method according to at least one of the preceding claims,
**characterised in that**
local extreme values arising in the course of the acceleration signal over time are determined and the p-quantile is determined for the set of local extreme values lying within the preset time window.

4. Method according to claim 3,
**characterised in that**
the local extreme values are local minimum values or local maximum values of the course of the acceleration signal overtime or the absolute amounts or negated absolute amounts of the local minimum and maximum values.

5. Method according to at least one of the preceding claims,
**characterised in that**
the preset time window is a time window having a duration of between 1 ms and 60 s, in particular between 100 ms and 10 s.

6. Method according to at least one of the preceding claims,
**characterised in that**
the value of p is not greater than 0.9, in particular not greater than 0.7, in particular between 0.1 and 0.5.

7. Method according to at least one of the preceding claims,
**characterised in that**
the threshold value is constant or depends on at least one parameter, for example the rail vehicle speed or a load.

8. Method according to at least one of the preceding claims,
**characterised in that**
a plurality of such acceleration signals are measured for different directions and a respective p-quantile is determined in each case and compared with a respective preset threshold value, and the criterion is checked whether the p-quantile in each case is above or below the respective preset threshold value.

9. Method according to at least one of the preceding claims,
**characterised in that**
in addition a parameter characterising the wheel speed is determined and compared with a preset reference curve, and the criterion is checked whether the parameter exceeds a preset degree of deviation from the preset reference curve.

10. Method according to at least one of the preceding claims,
**characterised in that**
in addition a sleeper frequency is determined and the interval between local extreme values arising in the course of the acceleration signal over time is compared with the sleeper frequency, and the criterion is checked whether the acceleration signal exceeds a preset degree of correlation with the sleeper frequency.

11. Method according to at least one of the preceding claims,
**characterised in that**
in addition the acceleration signal is monitored for the criterion whether there is an increase in amplitude to at least a preset level and over a preset duration.

12. Method according to at least one of claims 8 to 11,
**characterised in that**
a derailment is also detected if the, or at least one of the, further criterion/criteria is/are met, in particular over and beyond a preset period of time.

13. Method according to at least one of claims 8 to 12,
**characterised in that**
a derailment is only detected when at least two criteria have been met, in particular over and beyond a preset period of time.

14. Method according to at least one of claims 12 or 13,
**characterised in that**
the duration of the preset period of time differs for different criteria.

15. Method according to at least one of claims 8 to 14,
**characterised in that**
a derailment is detected as soon as at least a preset minimum number of criteria, in particular all criteria, are simultaneously met.

16. Method according to at least one of claims 8 to 15,
**characterised in that**
the results of the plurality of checks are evaluated jointly and a derailment can be detected, as an option, as a function of the joint evaluation.

17. Method according to at least one of claims 8 to 16,
**characterised in that**
a derailment is detected if the results of the plurality of checks correspond to a preset configuration.

18. Apparatus for detecting a derailment of at least one wheelset of a rail vehicle, having an acceleration sensor, which is designed to measure an acceleration signal representing the acceleration of the wheelset in vertical direction, in the direction of travel, in a transverse direction relative to the direction of travel of the rail vehicle, or in a direction made up of any combination of at least two of these directions,
**characterised by** an evaluation unit, which is designed to determine the p-quantile for a set of values, lying within a preset time window, of the course of the acceleration signal over time, p corresponding to a preset value greater than 0 and less than 1 and the duration of the preset time window being dependent on the rail vehicle speed, to compare the p-quantile with a preset threshold value and to check the criterion whether the p-quantile is above or below the preset threshold value.

## Revendications

1. Procédé de reconnaissance d'un déraillement d'au moins un
essieu d'un véhicule ferroviaire, dans lequel i
pendant une marche on mesure un signal d'accélération,
dans lequel
le signal d'accélération représente l'accélération de l'essieu dans la direction verticale, dans la direction de marche, dans la direction transversale, par rapport à une direction de marche du véhicule ferroviaire, ou dans une direction qui se compose de n'importe quelle superposition d'au moins deux de ces directions,
**caractérisé en ce que**
on détermine, pour un ensemble de valeurs, se trouvant dans un créneau temporel donné à l'avance, de la courbe en fonction du temps du signal d'accélération, le quantile p, p correspondant à une valeur donnée à l'avance plus grande que 0 et plus petite que 1, et la durée du créneau temporel donné à l'avance dépendant de la vitesse du véhicule ferroviaire, et
on compare le quantile p à une valeur de seuil donnée à l'avance et on contrôle le critère du point de savoir si le quantile p est supérieur ou inférieur à la valeur de seuil donnée à l'avance.

2. Procédé suivant la revendication 1, **caractérisé en ce qu'**avant la détermination du quantile p, on applique un filtre passe-bas au signal d'accélération.

3. Procédé suivant au moins l'une des revendications précédentes,
**caractérisé**
**en ce que** l'on détermine des extremums locaux se produisant dans la courbe en fonction du temps du signal d'accélération et on détermine le quantile p pour l'ensemble des extrémums locaux se trouvant dans le créneau temporel donné à l'avance.

4. Procédé suivant la revendication 3,
**caractérisé**
**en ce que** les extremums locaux sont des minimums locaux ou des maximums locaux de la courbe en fonction du temps de signal d'accélération ou des valeurs absolues négatives des minimums et des maximums locaux.

5. Procédé suivant au moins l'une des revendications précédentes,
**caractérisé**
**en ce que** le créneau temporel donné à l'avance est un créneau temporel d'une durée comprise entre 1ms et 60s, notamment entre 100ms et 10s.

6. Procédé suivant au moins l'une des revendications précédentes,
**caractérisé**
**en ce que** la valeur de p n'est pas plus grande que 0,9, notamment pas plus grande que 0,7, en étant notamment comprise entre 0,1 et 0,5.

7. Procédé suivant au moins l'une des revendications précédentes,
**caractérisé**
**en ce que** la valeur de seuil est constante ou dépend d'au moins un paramètre, par exemple de la vitesse du véhicule ferroviaire ou d'une charge.

8. Procédé suivant au moins l'une des revendications précédentes,
**caractérisé**
**en ce que** l'on mesure plusieurs signaux d'accélération de ce genre, dans diverses directions, et on détermine un quantile p respectif et on le compare à une valeur de seuil respective donnée à l'avance et **en ce que** l'on contrôle le critère respectif du point de savoir si le quantile p respectif est supérieur ou inférieur à la valeur de seuil respective donnée à l'avance.

9. Procédé suivant au moins l'une des revendications précédentes,
**caractérisé**
**en ce que** l'on détermine en outre un paramètre caractérisant la vitesse de roue et on le compare à une courbe de référence donnée à l'avance et **en ce que** l'on contrôle le critère du point de savoir si le paramètre dépasse une valeur donnée à l'avance d'écart à la courbe de référence donnée à l'avance.

10. Procédé suivant au moins l'une des revendications précédentes,
**caractérisé**
**en ce que** l'on détermine en outre une haute fréquence de seuil et on compare la distance temporelle d'extremums locaux se produisant dans la courbe en fonction du temps du signal d'accélération à la haute fréquence de seuil et on contrôle le critère du point de savoir si le signal d'accélération dépasse une mesure donnée à l'avance en corrélation avec la haute fréquence de seuil.

11. Procédé suivant au moins l'une des revendications précédentes,
**caractérisé**
**en ce que** l'on contrôle en outre le signal d'accélération sur le critère de la présence d'un saut d'amplitude au moins à un niveau donné à l'avance et pendant une durée donnée à l'avance.

12. Procédé suivant au moins l'une des revendications 8 à 11,
**caractérisé**
**en ce que** l'on reconnaît également un déraillement si le ou au moins l'un des autres critères est satisfait, notamment pendant un laps de temps donné à l'avance.

13. Procédé suivant au moins l'une des revendications 8 à 12,
**caractérisé**
**en ce que** l'on ne reconnaît un déraillement que si au moins deux critères sont satisfaits, notamment pendant au moins un laps de temps donné à l'avance.

14. Procédé suivant au moins la revendication 12 ou 13,
**caractérisé**
**en ce que** la durée du laps de temps donné à l'avance est différente pour divers critères.

15. Procédé suivant au moins l'une des revendications 8 à 14,
**caractérisé**
**en ce que** l'on reconnaît un déraillement dès qu'au moins un nombre minimum donné à l'avance de critères, notamment tous les critères, sont satisfaits en même temps.

16. Procédé suivant au moins l'une des revendications 8 à 15,
**caractérisé**
**en ce que** l'on évalue en commun les résultats des plusieurs contrôles et on reconnaît un déraillement au choix en fonction de l'évaluation commune.

17. Procédé suivant au moins l'une des revendications 8 à 16,
**caractérisé**
**en ce que** l'on reconnaît un déraillement si les résultats des plusieurs contrôles correspondent à une combinaison donnée à l'avance.

18. Installation de reconnaissance d'un déraillement d'au moins un essieu d'un véhicule ferroviaire, comprenant un capteur d'accélération, qui est conçu pour mesurer pendant une marche un signal d'accélération représentant l'accélération de l'essieu dans la direction verticale, dans la direction de marche, dans la direction transversale à une direction de marche du véhicule ferroviaire, ou dans une direction, qui est composée d'une superposition quelconque d'au moins deux de ces directions,
**caractérisée par** un dispositif d'exploitation, qui est constitué pour déterminer pour un ensemble de valeurs, se trouvant dans un créneau temporel donné à l'avance, de la courbe en fonction du temps du signal d'accélération, le quantile p, p étant une valeur donnée à l'avance plus grande que 0 et plus petite que 1, et dans laquelle la durée du créneau temporel donné à l'avance dépend de la vitesse du véhicule ferroviaire, pour comparer le quantile p à une valeur de seuil donnée à l'avance et pour contrôler le critère du point de savoir si le quantile p est supérieur ou inférieur à la valeur de seuil donnée à l'avance.
